# EUROPEAN PATENT APPLICATION

(11) **EP 4 530 625 A1**
(43) Date of publication of application: **02.04.2025**
(21) Application number: 22943666.2
(22) Date of filing: 23.05.2022
(51) Int. Cl.: G01N 29/22

(54) **PIPE INSPECTION DEVICE**

(71) Applicant: Hibot Corporation, Tokyo 141-0001 (JP)
(72) Inventor: YAMADA, Hiroya, Tokyo 141-0001 (JP)
(74) Representative: Kraus & Lederer PartGmbB
(86) International application number: PCT/JP2022/021165
(87) International publication number: WO 2023/228261

(57) **Abstract**

Problem: To provide a pipe inspection device that can be attached to the tip of a robot arm and that can press an ultrasonic probe approximately perpendicularly against the surfaces of pipes of various sizes.

Solution: A pipe inspection device including a multi-joint gripping member 1, a base 2, ultrasonic probe holding members 3, and a drive device 4 that drives the multi-joint gripping member 1, wherein the multi-joint gripping member 1 includes four or more link members 101-105 of a fixed length connected in series via rotation shafts and a mechanical restraining unit that always keeps angles between adjacent link members approximately equal, the base 2 is fixed to one of the link members constituting the multi-joint gripping member 1, each of the ultrasonic probe holding members 3 is fixed to a middle of one of the link members 101, 103, 105, and the drive device 4 is fixed to one of the link members constituting the multi-joint gripping member 1 or to the base 2.

## Description

### TECHNICAL FIELD

The present invention relates to a pipe inspection device that can be attached to the tip of a robot arm and that performs ultrasonic wave thickness measurements on pipes of various sizes.

### BACKGROUND ART

In general, pipes installed in factories and the like, due to corrosion thereof, gradually have reductions in their thicknesses, leading to a drop in strength. Since drops in strength can lead to accidents, the owners of said pipes must periodically perform inspections of the thicknesses of the pipes. One such inspection method is to measure the thicknesses of the pipes by contacting an ultrasonic probe with the surfaces of the pipes, by emitting ultrasonic waves, and by detecting the reflected waves from the inner surfaces of the pipes. Normally, such work is conducted by people, but if such work is performed with robot arms instead of people, it becomes possible to perform inspection work that is safe and efficient.

In thickness measurements using an ultrasonic probe, the ultrasonic probe must be pressed against the surface of the object to be inspected so that the direction of incidence of ultrasonic waves is approximately perpendicular to the surface (this state is called the "ultrasonic probe being perpendicular to the surface of the object to be inspected"). However, because the surface of a pipe is curved, it is not easy to perform such work using a robot arm. For this reason, some kind of device is required to properly guide the position and posture of the ultrasonic probe.

Patent Document 1 discloses an inspection device in which an ultrasonic probe is held by a frame having two rotation shafts and pressed perpendicularly against an object to be inspected.

In addition, Patent Document 2 discloses an ultrasonic wave inspection device in which a similar device is attached to the tip of a robot arm.

On the other hand, Patent Document 3 discloses a pipe inspection device that finely adjusts the posture of an ultrasonic probe using a parallel link.

In addition, while not disclosing an ultrasonic wave inspection device, in Patent Document 4, a multi-joint hand that can grasp a variety of objects is disclosed. It is also possible to mount an ultrasonic probe inside such a hand and form a pipe inspection device that guides the ultrasonic probe.

### CITATION LIST

### PATENT LITERATURE

Patent Document 1: US 5,576,492 A
Patent Document 2: EP 1744157 A2
Patent Document 3: JP 2000-088824 A
Patent Document 4: JP 2013-154409 A

### SUMMARY OF INVENTION

### TECHNICAL PROBLEM

The devices disclosed in Patent Document 1 and Patent Document 2 above adjust the posture of the ultrasonic probe by pressing the ultrasonic probe against an object to be inspected that has a gently curved surface. However, for example, in a pipe with an outer diameter of 50 mm, if the contact position changes by only 20 mm in the circumferential direction, the angle of the surface changes by about 45 degrees. In such a case, when the ultrasonic probe is pressed against the pipe surface, the ultrasonic probe slips on the surface of the pipe, making it difficult to maintain the position and posture of the ultrasonic probe appropriately.

Further, the device of the above-mentioned Patent Document 3 is complex and large, so it was difficult to attach it to the tip of a robot arm and use it.

In addition, the device having an ultrasonic probe mounted inside a hand as described above in Patent Document 4 is unable to properly guide the ultrasonic probe to the pipe in practice, as will be described later.

The present invention has been made in consideration of the above and has the purpose of providing a pipe inspection device that can press an ultrasonic probe approximately perpendicularly against the surfaces of pipes of various sizes.

### SOLUTION TO PROBLEM

The following is one embodiment for achieving the purpose by solving the above problems: A pipe inspection device including a multi-joint gripping member, a base, one or more ultrasonic probe holding members, and a drive device that drives the multi-joint gripping member, wherein the multi-joint gripping member includes four or more link members of a fixed length connected in series via rotation shafts and a mechanical restraining unit that always keeps angles between adjacent link members approximately equal, the base is fixed to one of the link members constituting the multi-joint gripping member, each of the ultrasonic probe holding members is fixed to a middle of one of the link members, and the drive device is fixed to one of the link members constituting the multi-joint gripping member or to the base.

In the pipe inspection device configured as above, the ultrasonic probe holding members are preferably connected to the multi-joint gripping member via a two-axis gimbal mechanism.

In the pipe inspection device configured as above, the mechanical restraining unit that always keeps the angles between adjacent link members of the multi-joint gripping member approximately equal preferably has a four-bar linkage mechanism.

In the pipe inspection device configured as above, the ultrasonic probe holding members preferably have a tube supplying a contact medium for ultrasonic wave measurement and a bellows holding the contact medium.

In the pipe inspection device configured as above, the multi-joint gripping member preferably has an angle sensor measuring the angles between adjacent link members.

### EFFECTS OF INVENTION

According to the present invention, it is possible to provide a pipe inspection device for pipes of various sizes in which one or more ultrasonic probes are pressed substantially perpendicularly against the surface of the pipe.

### BRIEF DESCRIPTION OF DRAWINGS

[FIG.1] A diagram of a pipe inspection device according to an embodiment.
[FIG. 2] A diagram showing a guiding operation by a multi-joint gripping member.
[FIG. 3] A diagram showing a geometric model of a multi-joint gripping member.
[FIG. 4] A diagram showing problems with the mechanism based on Patent Document 4.
[FIG. 5] A diagram showing an ultrasonic probe holding member having a two-axis gimbal mechanism.
[FIG. 6] A diagram showing a case in which a four-bar linkage mechanism is used to equalize the angles formed by the link members.
[FIG. 7] A diagram showing an ultrasonic probe holding member having a tube and bellows for supplying a contact medium.
[FIG. 8] A diagram showing a pipe inspection device having a sensor for measuring the angles formed by the link members.

### DESCRIPTION OF EMBODIMENTS

Hereinafter, an embodiment of the present invention will be explained with reference to the drawings. The following explanation shows specific examples of the present invention, and the present invention is not limited to these explanations. Changes and modifications are possible within the scope of the technical ideas disclosed in this specification.

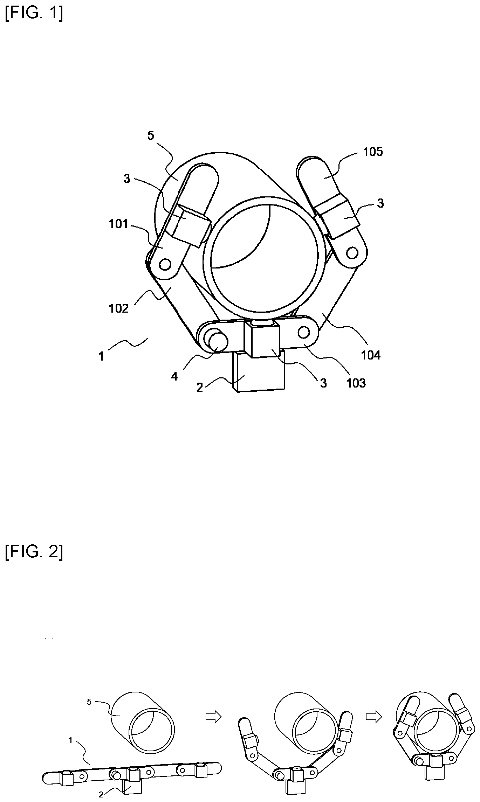

FIG. 1 illustrates one example of an embodiment for practicing the present invention. The pipe inspection device comprises a multi-joint gripping member 1, a base 2, three ultrasonic probe holding members 3, and a drive device 4 that drives the multi-joint gripping member 1. The multi-joint gripping member 1 comprises multiple link members 101 to 105 of a fixed length connected in series via rotating shafts, and a mechanical restraining unit (not shown) that always keeps the angles between adjacent link members approximately equal. The base 2 is fixed to the link member 103. The ultrasonic probe holding members 3 are fixed to the middle of the link members 101, 103, and 105. The pipe inspection device grips a pipe 5 to be inspected.

The base 2 serves as the base of the pipe inspection device and is attached to the tip of a robot arm (not shown).

The drive device 4 is fixed to the link member 103. The drive device 4 comprises an electric motor, a solenoid, a pneumatic cylinder, or the like, and generates a torque that rotates the link member 102.

FIG. 2 shows the movement of the multi-joint gripping member 1. First, in a state with the multi-joint gripping member 1 open, the robot arm is operated to bring the middle of the link member 103 closer to the pipe 5. At this time, the middle of the link member 103 and the pipe 5 are intentionally positioned apart to account for errors in the position recognition sensor of the robot arm or to prevent collisions between the multi-joint gripping member 1 and the pipe 5 to be inspected.

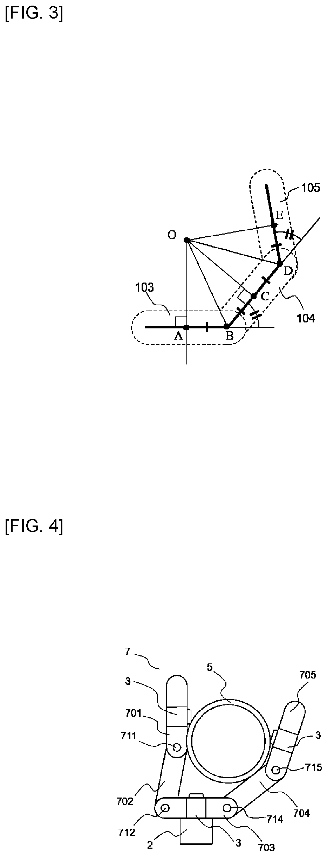

In this state, the multi-joint gripping member 1 is driven in a direction to grip the pipe 5 by the torque generated by the drive device 4. Then, one end of the multi-joint gripping member 1 comes into contact with the pipe 5. At this time, when the link member 103 is pressed against the pipe 5 by the robot arm, the middle of the link member 103 is guided toward the pipe 5 by the reaction force that the multi-joint gripping member 1 receives from the pipe. When the middle of the link member 103 comes into contact with the pipe 5, the multi-joint gripping member 1 grips the pipe 5. Because the link members 102 and 104 move symmetrically due to mechanical constraints, the ultrasonic probe holding member 3 fixed to the middle of the link member 103 presses the ultrasonic probe perpendicularly against the pipe 5. At the same time, the ultrasonic probe holding members 3 attached to the link members 101 and 105 also press the ultrasonic probes perpendicularly against the pipe 5. This geometric model will be explained with reference to FIG. 3.

FIG. 3 shows a geometric model of the multi-joint gripping member 1. Points A, C, and E are the middles of the link members 103, 104, and 105, respectively. Points B and D are rotation shafts connecting the link members 103 and 104, and 104 and 105, respectively. Point O is the intersection point of the perpendicular line to AB passing through point A and the perpendicular bisector of line segment BD. To confirm that the ultrasonic probe holding members 3 fixed to points A and E are perpendicular to the pipe surface, it is sufficient to confirm that angle OED = 90 degrees and OA = OE.

Since the lengths of the link members 103 and 104 are equal, AB = BC. In this case, the right-angled triangles OAB and OCB are congruent because their hypotenuses are equal and their other sides are equal. Therefore, angle OBA = angle OBC. Furthermore, since BC = CD, triangles OCB and OCD are congruent, and therefore angle OBC = angle ODC. Due to mechanical constraints, angle ABC = angle CDE, so angle ODE = (angle CDE - angle ODC) = (angle ABC - angle OBC) = angle OBA = angle ODC. At the same time, since CD = DE, triangles OCD and OED are congruent. In the end, triangles OED and OAB are congruent, so angle OED = 90 degrees and OA = OE. This relationship holds regardless of the size of angle ABC, so the ultrasonic probes attached to A and E can be pressed perpendicularly against the surfaces of pipes of various sizes. Moreover, it is clear that the same effect can be obtained even if a link member is further connected.

Here, as described above, a case where the gripping device 7 based on Patent Document 4 is used instead of the multi-joint gripping member 1 of the present invention will be explained with reference to FIG. 4. The gripping device 7 is composed of finger members 701 to 705, and the ultrasonic probe holding members 3 are fixed to the middles of the finger members 701, 703, and 705. When the gripping device 7 grips the pipe 5, first, the finger members 701 and 702, and the finger members 704 and 705, rotate around the rotation fulcrums 712 and 714, respectively, while remaining integral. Then, when the finger members 702 and 704 come into contact with the pipe 5 and the movement of the finger members 702 and 704 is inhibited, then the finger members 701 and 705 rotate around the rotation fulcrums 712 and 714, respectively, and grip the pipe 5. With this operation, the gripping device 7 based on Patent Document 4 can grip pipes of various sizes. However, as illustrated in FIG.4, since the rotation angles of the rotation fulcrums 711, 712, 714, and 715 are different from one another, the ultrasonic probe holding members 3 are not perpendicular to the surface of the pipe 5. Therefore, it is clear that the gripping device 7 based on Patent Document 4 cannot solve the problem of the present invention.

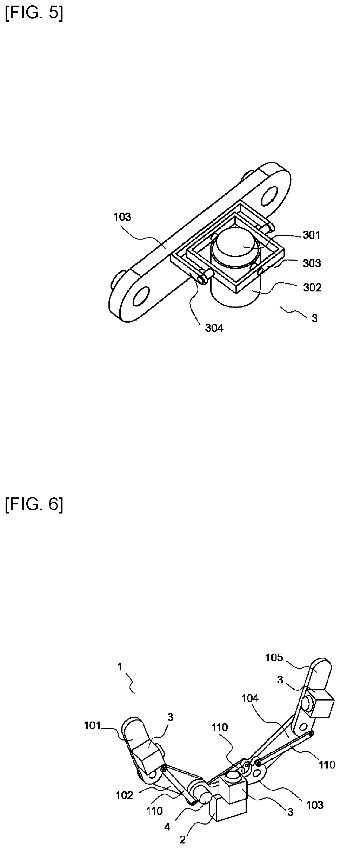

Generally, due to errors in component dimensions and play in the rotation shafts, the shape of the multi-joint gripping member 1 does not completely match the geometric model shown in FIG. 3. Therefore, the ultrasonic probes are almost perpendicular to the surface of the pipe 5, but are not completely perpendicular. However, if the ultrasonic probe holding members 3 have a two-axis gimbal comprising an ultrasonic probe holder 302 and frames 303 and 304 as shown in FIG. 5, the ultrasonic probe 301 can take a perpendicular posture to the pipe 5 due to the reaction force received by its contact surface. For this reason, it is preferable that the ultrasonic probe holding members 3 have a two-axis gimbal mechanism.

Further, the mechanical restraining unit that always keeps the angles between adjacent link members substantially equal can comprise, for example, gears, timing belts, link mechanisms, etc. FIG. 6 shows a multi-joint gripping member 1 in which a four-bar linkage mechanism is configured by link bars 110. In general, compared with gears and timing belts, a four-bar linkage mechanism has the advantage of having fewer parts and being less likely to break. On the other hand, the four-bar linkage mechanism has the problem that it does not operate well in a posture close to a singular point. However, in the case of the multi-joint gripping member 1 of the present invention, if the angles between adjacent link members are limited to about 60 degrees, a four-bar linkage mechanism designed to avoid a singular point may be adopted as the mechanical restraining unit.

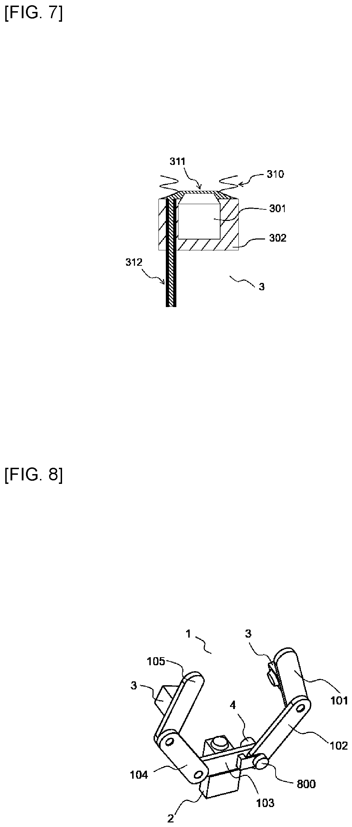

In order to obtain reflected signals of ultrasonic waves, it is necessary to supply a liquid called a contact medium between the ultrasonic probe and the pipe surface. FIG. 7 shows an ultrasonic probe holding member 3 equipped with a tube 312 supplying the contact medium 311 and a bellows 310 holding the contact medium 311. When making a measurement, first, the contact medium 311 is stored inside the bellows 310 via the tube 312 from a contact medium supply device (not shown). When the pipe 5 is gripped in this state, the bellows 310 is compressed, and the contact medium 311 is pushed out and covers the surface of the ultrasonic probe 301. In this way, the ultrasonic probe holding member 3 may be equipped with a tube 312 supplying a contact medium 311 and a bellows 310 holding the contact medium.

Further, as illustrated in FIG. 8, the multi-joint gripping member 1 may have an angle sensor 800 for measuring the angle between adjacent link members. The angle measured by the angle sensor 800 can be used to control the movement of the multi-joint gripping member.

Although an embodiment of the present invention has been explained above, the present invention is not limited to the above embodiment, and various modifications are possible within the scope of the claims and the technical ideas described in the specification and drawings. For example, the number of link members constituting the multi-joint gripping member 1 may be six. Also, the number of ultrasonic probes 3 may be two.

### REFERENCE SIGNS LIST

- 1: Multi-joint gripping member
- 2: Base
- 3: Ultrasonic probe holding member
- 4: Drive device
- 5: Pipe
- 7: Gripping device based on Patent Document 4
- 101: Link member
- 102: Link member
- 103: Link member
- 104: Link member
- 105: Link member
- 110: Link bars
- 301: Ultrasonic probe
- 302: Ultrasonic probe holder
- 303: Frame
- 304: Frame
- 310: Bellows
- 311: Contact medium
- 312: Tube
- 701: Finger member of gripping device based on Patent Document 4
- 702: Finger member of gripping device based on Patent Document 4
- 703: Finger member of gripping device based on Patent Document 4
- 704: Finger member of gripping device based on Patent Document 4
- 705: Finger member of gripping device based on Patent Document 4
- 711: Rotation fulcrum of gripping device based on Patent Document 4
- 712: Rotation fulcrum of gripping device based on Patent Document 4
- 714: Rotation fulcrum of gripping device based on Patent Document 4
- 715: Rotation fulcrum of gripping device based on Patent Document 4
- 800: Angle sensor

## Claims

1. A pipe inspection device comprising a multi-joint gripping member, a base, one or more ultrasonic probe holding members, and a drive device that drives the multi-joint gripping member, wherein
the multi-joint gripping member comprises four or more link members of a fixed length connected in series via rotation shafts and a mechanical restraining unit that always keeps angles between adjacent link members approximately equal,
the base is fixed to one of the link members constituting the multi-joint gripping member,
each of the ultrasonic probe holding members is fixed to a middle of one of the link members, and
the drive device is fixed to one of the link members constituting the multi-joint gripping member or to the base.

2. The pipe inspection device according to claim 1, wherein the ultrasonic probe holding members have a two-axis gimbal mechanism.

3. The pipe inspection device according to claim 1 or 2, wherein the mechanical restraining unit that always keeps the angles between adjacent link members of the multi-joint gripping member approximately equal has a four-bar linkage mechanism.

4. The pipe inspection device according to claim 1, wherein the ultrasonic probe holding members have a tube supplying a contact medium and a bellows holding the contact medium.

5. The pipe inspection device according to claim 1, wherein the multi-joint gripping member has an angle sensor measuring the angles between adjacent link members.
